# EUROPEAN PATENT SPECIFICATION

(11) **EP 3 767 423 B1**
(45) Date of publication and mention of the grant of the patent: **27.04.2022**
(21) Application number: 20184780.3
(22) Date of filing: 08.07.2020
(51) Int. Cl.: G05D 1/10, E02F 9/20, B25J 9/16

(54) **WORK MACHINE AND WORK MACHINE SUPPORT SERVER**
ARBEITSMASCHINE UND SERVER ZUR UNTERSTÜTZUNG VON ARBEITSMASCHINEN
MACHINE DE TRAVAIL ET SERVEUR DE SUPPORT DE MACHINE DE TRAVAIL

(30) Priority: 17.07.2019 JP 2019132105
(43) Date of publication of application: 20.01.2021
(73) Proprietor: KOBELCO CONSTRUCTION MACHINERY CO., LTD., Hiroshima-shi Hiroshima 731-5161 (JP)
(72) Inventor: Eita, Akihiko, Hiroshima-shi, Hiroshima 731-5161 (JP); Fujita, Shuhei, Hiroshima-shi, Hiroshima 731-5161 (JP)
(74) Representative: Schön, Christoph

(56) References cited:
- EP-A1- 3 409 849
- US-A1- 2008 140 256

## Description

### BACKGROUND OF THE INVENTION

### 1. Field of the Invention

The present invention relates to a work machine such as a building demolition machine.

### 2. Description of the Related Art

There has been proposed a technology in which a camera attached to an autonomous flying body is used to image a space that cannot be imaged by a camera attached to an upper pivoting body of an excavator (refer to, for example, WO2017/131194).

However, if an excavator is operated without regard to the position of a flying body, then the possibility of contact between the excavator and the flying body inconveniently increases.

### SUMMARY OF THE INVENTION

An object of the present invention is, therefore, to provide mainly a work machine that can reduce the possibility of contact with an unmanned aircraft flying around.

The present invention relates to a work machine according to claim 1. Further, the present invention relates to a work machine support server according to claim 4.

### BRIEF DESCRIPTION OF THE DRAWINGS

FIG. 1 is an explanatory diagram illustrating the configurations of a work machine and an unmanned aircraft as one embodiment of the present invention;
FIG. 2 is an explanatory diagram illustrating the configuration of an operating mechanism of the work machine;
FIG. 3 is an explanatory diagram illustrating the functions of the work machine as one embodiment of the present invention;
FIG. 4 is an explanatory diagram illustrating an image output mode in an image output unit;
FIG. 5 is an explanatory diagram illustrating a method for recognizing the degree of possibility of contact between the work machine and the unmanned aircraft;
FIG. 6 is an explanatory diagram illustrating a first control mode of the working mechanism or the like according to the degree of possibility of contact with the unmanned aircraft;
FIG. 7 is an explanatory diagram illustrating a second control mode of the working mechanism or the like according to the degree of possibility of contact with the unmanned aircraft; and
FIG. 8 is an explanatory diagram illustrating the configuration of a work machine support server as one embodiment of the present invention.

### DESCRIPTION OF THE PREFERRED EMBODIMENTS

### (Configuration)

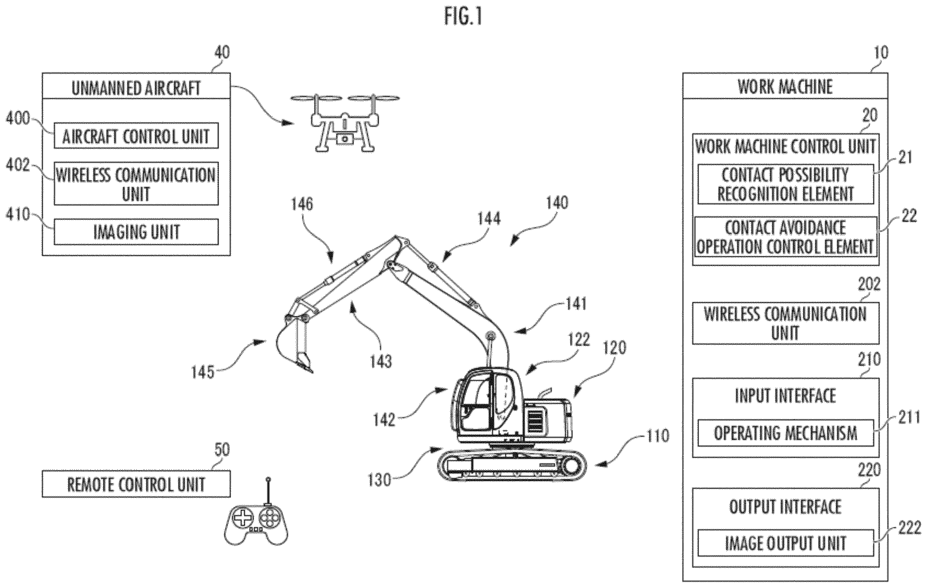

A work machine 10 as one embodiment of the present invention illustrated in FIG. 1 performs predetermined work in collaboration with an unmanned aircraft 40. The work machine 10 is, for example, a crawler excavator (construction machine), and includes a crawler type lower traveling body 110 and an upper pivoting body 120 pivotably mounted on the lower traveling body 110 through the intermediary of a pivoting mechanism 130. A cab (driver compartment) 122 is provided on the left front side of the upper pivoting body 120. A work attachment serving as a working mechanism 140 is provided at the front center of the upper pivoting body 120.

The working mechanism 140 includes a boom 141 liftably attached to the upper pivoting body 120, an arm 143 rotatably connected to the distal end of the boom 141, and a bucket 145 rotatably connected to the distal end of the arm 143. Attached to the working mechanism 140 are a boom cylinder 142, an arm cylinder 144, and a bucket cylinder 146 composed of expandable hydraulic cylinders. In place of the bucket 145, other attachment such as a nibbler may be attached to the distal end of the arm 143.

The boom cylinder 142 is interposed between the boom 141 and the upper pivoting body 120 so that the boom cylinder 142 expands or contracts by receiving the supply of hydraulic oil thereby to cause the boom 141 to pivot in an upward or downward direction. The arm cylinder 144 is interposed between the arm 143 and the boom 141 such that the arm cylinder 144 expands or contracts by receiving the supply of hydraulic oil thereby to cause the arm 143 to pivot around a horizontal axis with respect to the boom 141. The bucket cylinder 146 is interposed between the bucket 145 and the arm 143 such that the bucket cylinder 146 expands or contracts by receiving the supply of hydraulic oil thereby to cause the bucket 145 to pivot around the horizontal axis with respect to the arm 143.

The work machine 10 includes a work machine control unit 20, a wireless communication unit 202, an input interface 210, and an output interface 220. The work machine control unit 20 is composed of an arithmetic processing unit (a single-core processor, a multi-core processor, or a processor core that constitutes the single-core processor or the multi-core processor), which reads necessary data and software from a memory or other storage device, and executes arithmetic processing on the data according to the software.

The work machine control unit 20 includes a contact possibility recognition element 21 and a contact avoidance operation control element 22. The contact possibility recognition element 21 recognizes the degree of possibility of contact between the working mechanism 140 and the unmanned aircraft 40 on the basis of the relative position of the unmanned aircraft 40 with reference to the working mechanism 140. The term "recognition" refers to a concept that encompasses determining, designating or estimating the degree of possibility of contact on the basis of the relative position of the unmanned aircraft 40 with reference to the working mechanism 140, and receiving a result of the determination or reading from a storage unit. If the contact possibility recognition element 21 recognizes that the contact possibility is high, then the contact avoidance operation control element 22 transmits a specified signal for changing the flight mode of the unmanned aircraft 40 to the unmanned aircraft 40 or a remote control unit 50.

An operating mechanism 211 constituting the input interface 210 includes a travel operating unit, a pivoting operating unit, a boom operating unit, an arm operating unit, and a bucket operating unit. Each of the operating units has an operating lever subjected to rotational operations. The operating lever (travel lever) of the travel operating unit is operated to move the lower traveling body 110. The travel lever may also serve as a travel pedal. For example, a travel pedal fixed to the base or lower end of the travel lever may be provided. The operating lever of the pivoting operating unit (pivoting lever) is operated to move a hydraulic pivoting motor constituting the pivoting mechanism 130. The operating lever of the boom operating unit (boom lever) is operated to move a boom cylinder 142. The operating lever of the arm operating unit (arm lever) is operated to move an arm cylinder 144. An operating lever (bucket lever) of the bucket operating unit is operated to move a bucket cylinder 146.

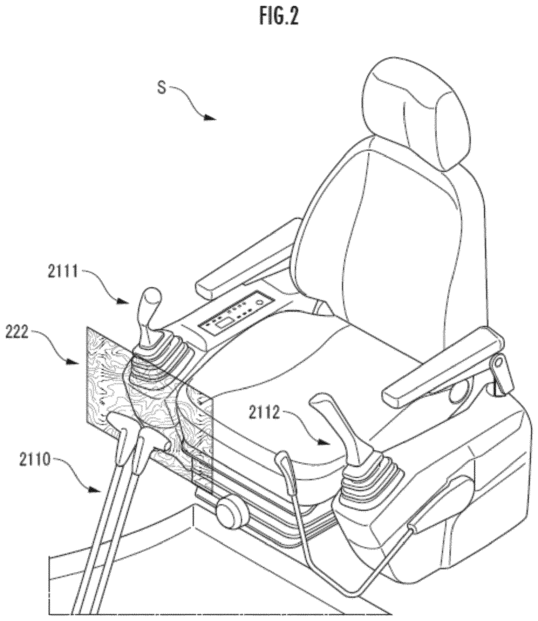

The operating levers constituting the operating mechanism 211 are placed, for example, around a seat S for an operator to sit on, as illustrated in FIG. 2. The seat S is in the form of a high-back chair with armrests, but may be in any form that allows an operator to sit thereon, such as a low-back chair without a headrest, or a chair without a backrest.

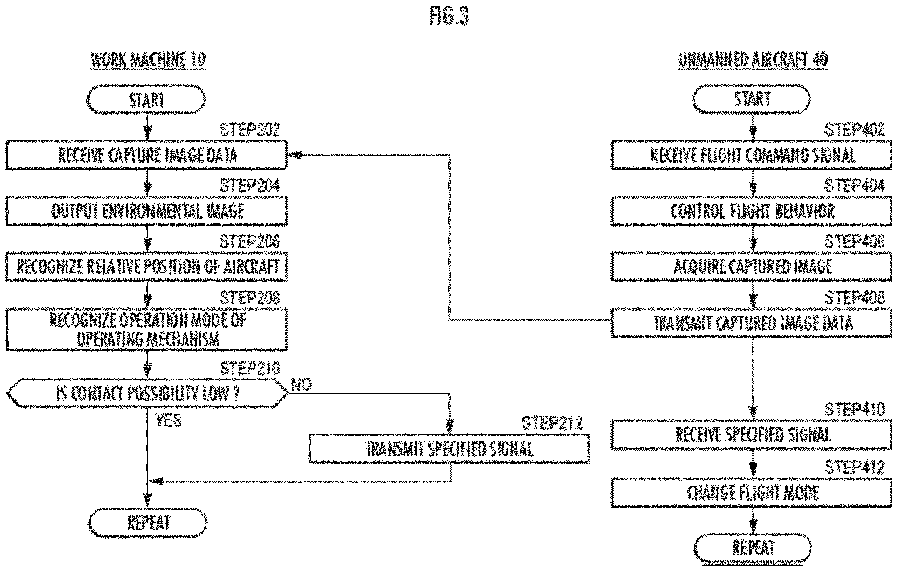

A pair of left and right travel levers 2110 corresponding to the left and right crawlers are placed side by side in front of the seat S. A single operating lever may serve as a plurality of operating levers. For example, a right operating lever 2111 provided in front of a right frame of the seat S illustrated in FIG. 3 may function as a boom lever when operated in a longitudinal direction, and may function as a bucket lever when operated in a lateral direction. Similarly, a left operating lever 2112 provided in front of a left frame of the seat S illustrated in FIG. 3 may function as an arm lever when operated in the longitudinal direction, and may function as a pivoting lever when operated in the lateral direction. The lever pattern may be arbitrarily changed according to an operating instruction of the operator.

An image output unit 222 constituting the output interface 220 is placed, for example, in front of the seat S, as illustrated in FIG. 2. The image output unit 222 may be further provided with a speaker (audio output device).

The unmanned aircraft 40 includes an aircraft control unit 400, a wireless communication unit 402, and an imaging unit 410. The unmanned aircraft 40 may be a constituent element of the work machine 10. In this case, the work machine 10 may be provided with a basement where the unmanned aircraft 40 departs and lands. The unmanned aircraft 40 is a rotorcraft, and mainly includes a plurality (e.g., four, six, or eight) of blades, an electric motor (actuator) for rotating the plurality of blades, a battery for supplying power to the motor, and the like. The unmanned aircraft 40 can be operated through a remote control unit. For example, the remote control unit of the unmanned aircraft 40 may be constituted by the input interface 210.

### (Function)

In the unmanned aircraft 40, a flight command signal transmitted from the remote control unit 50 is received by the aircraft control unit 400 through the wireless communication unit 402 (STEP402 of FIG. 3). The aircraft control unit 400 controls the actuator (the electric motor) and the rotational movement of each of the plurality of blades powered by the actuator (STEP404 of FIG. 3). This enables the unmanned aircraft 40 to fly, ascend or descend on the spot, or remain in the air by an airflow generated by the rotation of the plurality of blades.

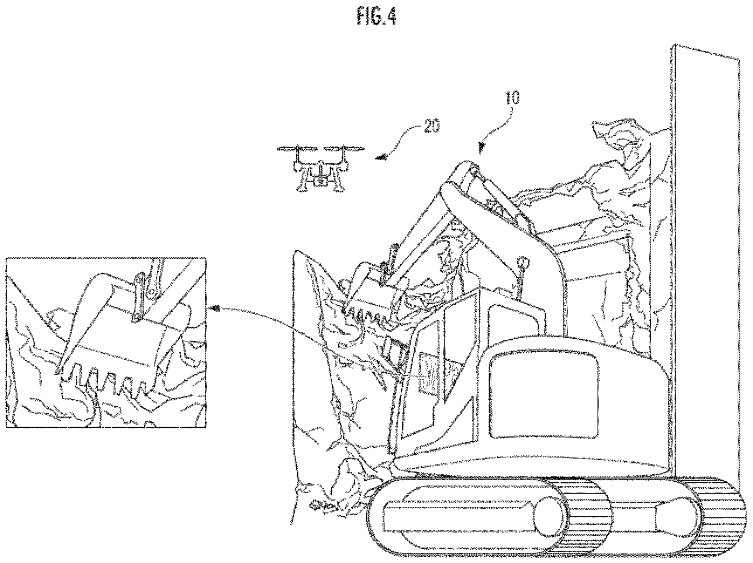

In the unmanned aircraft 40, the imaging unit 410 acquires a captured image that includes a specific portion of the working mechanism 140, such as the bucket 145, which is the distal end portion of an attachment (STEP406 of FIG. 3). Thus, for example, as illustrated on the left side in FIG. 4, when the work machine 10 is destroying a building, the bucket 145 is imaged from obliquely left front and from above by the imaging unit 410 mounted on the unmanned aircraft 40. The captured image data representing the captured image is transmitted to the work machine 10 by the aircraft control unit 400 through the wireless communication unit 402 (STEP408 of FIG. 3).

In the work machine 10, the captured image data is received by the work machine control unit 20 through the wireless communication unit 202 (STEP202 of FIG. 3). By the work machine control unit 20, an environmental image based on the captured image data (all or a part of the captured image itself or a simulated environmental image generated on the basis thereof) is displayed on the image output unit 222 (STEP204 of FIG. 3). Thus, for example, as illustrated on the right side in FIG. 4, an environmental image including the bucket 145 when the work machine 10 is destroying the building is displayed on the image output unit 222.

The work machine control unit 20 recognizes the relative position of the unmanned aircraft 40 with reference to the working mechanism 140 (STEP206 of FIG. 3). For example, by referring to an image database on the basis of the shape and the size of each of the bucket 145, the arm 143, and the boom 141 in the captured image, the relative position of the unmanned aircraft 40 with reference to a specified location of each of the bucket 145, the arm 143, and the boom 141 is estimated. A marker of a predetermined shape may be attached to a specified location of each of the bucket 145, the arm 143, and the boom 141, and the relative position of the unmanned aircraft 40 may be estimated with reference to the specified location of each of the bucket 145, the arm 143, and the boom 141 by referring to the image database on the basis of the shapes and the sizes of the markers in the captured image. A ranging image sensor or a TOF sensor may be mounted on the unmanned aircraft 40, and the relative position of the unmanned aircraft 40 with reference to the specified location of each of the bucket 145, the arm 143, and the boom 141 may be estimated on the basis of the ranging data acquired through the sensor.

The position (and attitude) of the unmanned aircraft 40 in a world coordinate system (or a real space coordinate system) may be measured, and the result of the measurement may be transmitted from the unmanned aircraft 40 to the work machine 10 so as to measure the real space position of the unmanned aircraft 40 or the relative position of the unmanned aircraft 40 with reference to the specified location of each of the bucket 145, the arm 143, and the boom 141 by the contact possibility recognition element 21.

The latitude (Y coordinate value) and the longitude (X coordinate value) in the world coordinate system (or the real space coordinate system) are measured by a positioning device such as a GPS mounted on the unmanned aircraft 40. The absolute altitude or the air pressure altitude (Z coordinate value) in the world coordinate system is measured by the TOF sensor or an atmospheric pressure sensor.

The position and the attitude of each of the boom 141, the arm 143, and the bucket 145 in a work machine coordinate system (a coordinate system in which the position and the attitude are fixed with respect to the upper pivoting body 120) are measured on the basis of the angle of each of the coupling mechanism (or a joint mechanism) for the upper pivoting body 120 and the boom 141, the coupling mechanism for the boom 141 and the arm 143, and the coupling mechanism for the arm 143 and the bucket 145, and the size of each of the boom 141, the arm 143, and the bucket 145. The latitudes (Y coordinate values) and the longitudes (X coordinate values) of the upper pivoting body 120 and the work machine coordinate system in the world coordinate system are measured by a positioning system, such as a GPS, mounted on the upper pivoting body 120. The Z coordinate value of the work machine coordinate system in the world coordinate system is determined in advance. The attitude of the work machine coordinate system in the world coordinate system is measured by an azimuth sensor and a tilt angle sensor mounted on the upper pivoting body 120. Thus, the position and the attitude of each of the boom 141, the arm 143, and the bucket 145 in the world coordinate system are measured.

The work machine control unit 20 recognizes the control mode of each of the operating levers, which constitute the operating mechanism 211, selected by the operator (STEP208 of FIG. 3).

In the work machine control unit 20, the contact possibility recognition element 21 determines whether the possibility of contact between the working mechanism 140 and the unmanned aircraft 40 is low on the basis of the relative position of the unmanned aircraft 40 with reference to one or a plurality of specified locations of the working mechanism 140 and the control mode of each of the operating levers constituting the operating mechanism 211 selected by the operator (STEP210 of FIG. 3). For example, if the interval between a specified location of the working mechanism 140 and the unmanned aircraft 40 is equal to or less than a predetermined value, and the operation mode of the working mechanism 140 or the like as a working mechanism according to the control mode of the operating mechanism 211 is an operation mode that brings the specified location closer to the unmanned aircraft 40, then it is determined that there is a high probability of contact between the working mechanism 140 and the unmanned aircraft 40.

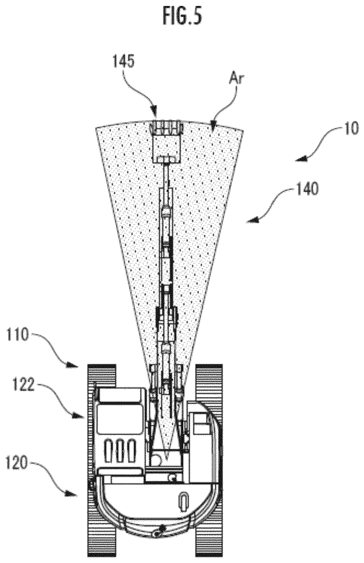

The degree of possibility of contact between the working mechanism 140 and the unmanned aircraft 40 may alternatively be recognized according to whether the real space position of the unmanned aircraft 40 is included in a reference space determined on the basis of the overall attitude of the working mechanism 140. The term "reference space" is defined such that the reference space includes a space that the working mechanism 140 or a part thereof occupies or passes through in a specified period of time when the upper pivoting body 120 pivots with respect to the lower traveling body 110. For example, as illustrated in FIG. 5, a reference space Ar is defined such that the reference space Ar includes a space that the working mechanism 140 or a part thereof occupies or passes through when the upper pivoting body 120 pivots clockwise or counterclockwise with respect to the lower traveling body 110. The overall attitude of the working mechanism 140 and the mode of extension thereof in a vertical direction and the longitudinal direction can be estimated on the basis of the measurement result of the angle of each of the coupling mechanism (or the joint mechanism) for the upper pivoting body 120 and the boom 141, the coupling mechanism for the boom 141 and the arm 143, and the coupling mechanism for the arm 143 and the bucket 145.

The central angle of the reference space Ar having a substantially fan-shaped cross section corresponds to a pivotable angle of the upper pivoting body 120 with respect to the lower traveling body 110 in a specified period of time. In a situation in which the upper pivoting body 120 is pivoting counterclockwise with respect to the lower traveling body 110, the reference space Ar may be defined such that the angle in the counterclockwise direction is larger than the angle in the clockwise direction, i.e., such that the reference space Ar is asymmetrical with reference to the working mechanism 140.

If it is recognized that the possibility of contact between the working mechanism 140 and the unmanned aircraft 40 is high (NO in STEP210 of FIG. 3), then the contact avoidance operation control element 22 transmits a specified signal to the unmanned aircraft 40 (STEP 212 of FIG. 3). The "specified signal" is a signal for changing the flight mode of the unmanned aircraft 40, and may include a signal which merely indicates that there is a high possibility of contact with the working mechanism 140 or a command signal instructing a change of the relative position with reference to the working mechanism 140.

In the unmanned aircraft 40, the aircraft control unit 400 receives the specified signal through the wireless communication unit 402 (STEP410 of FIG. 3). Thus, for example, the movements of a plurality of blades are controlled such that the interval between the unmanned aircraft 40 and a specified location on the working mechanism 140 increases, i.e. the unmanned aircraft 40 moves away from the working mechanism 140. A flight mode may be preferentially selected, in which the unmanned aircraft 40 ascends from the spot by making use of the characteristics as a rotorcraft.

When the specified signal is transmitted to the remote control unit 50, the reception of the specified signal or a guidance on an operation mode that is effective for moving the unmanned aircraft 40 away from the working mechanism 140 may be displayed on an output interface constituting the remote control unit 50, and the operator may be notified of the change of the operation mode through an input interface of the remote control unit 50 according to the displayed information.

On the other hand, if it is recognized that the possibility of contact between the working mechanism 140 and the unmanned aircraft 40 is low (YES in STEP210 of FIG. 3), then a series of processing is terminated, and the series of processing is repeated again. In this case, the contact avoidance operation control element 22 may transmit a signal which indicates that a change of the flight mode is unnecessary to the unmanned aircraft 40 or the remote control unit 50.

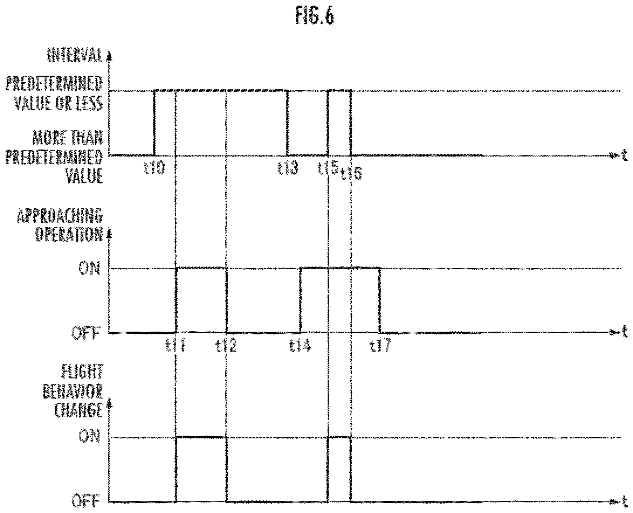

For example, a case will be discussed, where the interval between a specified location of the working mechanism 140 and the unmanned aircraft 40 is equal to or less than a predetermined value during each of the periods of time t = t₁₀ ~ t₁₃ and t = t₁₅ ~ t₁₆ as illustrated in the upper stage of FIG. 6, and the operation mode of the working mechanism 140 or the like is an operation mode in which the interval between the specified location and the unmanned aircraft 40 decreases in each of the periods of time t = t₁₁ ~ t₁₂ (tio < t₁₁, t₁₂ < t₁₃) and t = t₁₄ ~ t₁₇ (t₁₄ < t₁₅, t₁₆ < t₁₇) as illustrated in the middle stage of FIG. 6. In this case, as illustrated in the lower stage of FIG. 6, the flight mode of the unmanned aircraft 40 is changed from a preceding flight mode (the flight mode based on a control mode of the remote control unit 50) in each of the periods of time t = t₁₁ ~ t₁₂ and t = t₁₅ ~ t₁₆ during which the interval between the specified location of the working mechanism 140 and the unmanned aircraft 40 is equal to or less than a predetermined value, and the operation mode of the working mechanism 140 or the like is an operation mode for approaching to the unmanned aircraft 40.

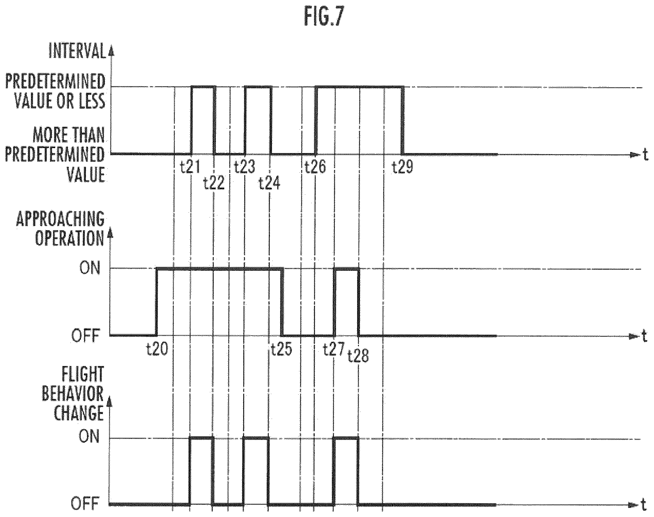

For example, a case will be discussed, where the interval between a specified location of the working mechanism 140 and the unmanned aircraft 40 is equal to or less than a predetermined value during each of the periods of time t = t₂₁ ~ t₂₂ and t = t₂₃ ~ t₂₄ and t = t₂₆ ~ t₂₉ as illustrated in the upper stage of FIG. 7, and the operation mode of the working mechanism 140 or the like is an operation mode in which the interval between the specified location and the unmanned aircraft 40 decreases in each of the periods of time t = t₂₀ ~ t₂₅ (t₂₀ < t₂₁, t₂₄ < t₂₅) and t = t₂₇ ~ t₂₈ (t₂₆ < t₂₇, t₂₈ < t₂₉) as illustrated in the middle stage of FIG. 7. In this case, as illustrated in the lower stage of FIG. 7, the flight mode of the unmanned aircraft 40 is changed from a preceding mode (the flight mode based on a control mode of the remote control unit 50) in each of the periods of time t = t₂₁ ~ t₂₂, t = t₂₃ ~ t₂₄ and t = t₂₇ ~ t₂₈ during which the interval between the specified location of the working mechanism 140 and the unmanned aircraft 40 is equal to or less than a predetermined value, and the operation mode of the working mechanism 140 or the like is an operation mode for approaching to the unmanned aircraft 40.

### (Effect)

If it is recognized that the possibility of contact between the working mechanism 140 constituting the work machine 10 having the configuration and the unmanned aircraft 40 is high, then the flight behavior of the unmanned aircraft 40 is controlled, thereby reducing the possibility of contact (refer to FIG. 6 and FIG. 7).

The contact possibility recognition element 21 recognizes a state of change in the possibility of contact between the working mechanism 140 and the unmanned aircraft 40 based on a state of change in the relative position of the unmanned aircraft 40 with reference to the working mechanism 140 according to the operation mode of at least one of the lower traveling body 110, the upper pivoting body 120, and the working mechanism 140, and the contact avoidance operation control element 22 transmits a specified signal for changing the flight mode of the unmanned aircraft 40 to the unmanned aircraft 40 or the remote control unit 50 of the unmanned aircraft 40 if the contact possibility recognition element 21 recognizes that the contact possibility will be high.

According to the work machine having the configuration, if it is recognized that maintaining the operation mode of the working mechanism 140 or the like will lead to a high possibility of contact between the working mechanism 140 and the unmanned aircraft 40 in the future, then the flight mode of the unmanned aircraft 40 is changed thereby to reduce the possibility of contact.

The contact possibility recognition element 21 recognizes the spread state of a reference space encompassing a space that the working mechanism 140 occupies or passes through in a specified period of time on the basis of the operation mode of at least one of the lower traveling body 110, the upper pivoting body 120, and the working mechanism 140 in the specified period of time, and recognizes that the contact possibility is high if the real space position of the unmanned aircraft 40 is included in the reference space.

According to the work machine having the configuration, when the working mechanism 140 or the like is operated in a specified period of time, the possibility of contact between the working mechanism 140 and the unmanned aircraft 40 in the specified period of time is predicted in advance, and the operation of the unmanned aircraft 40 is controlled, thus further reducing the contact possibility.

### (Another embodiment of the present invention)

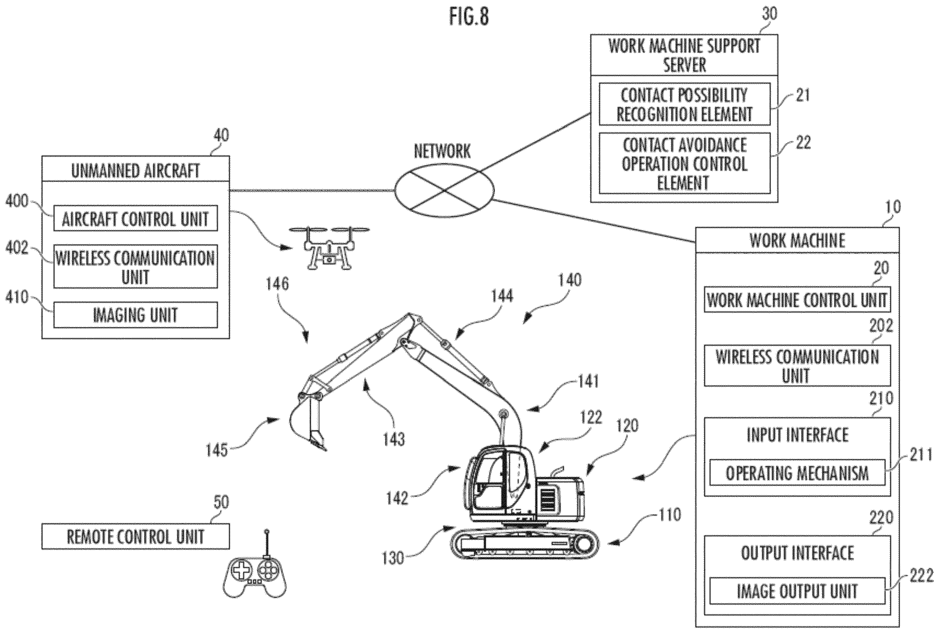

A work machine support server 30 as one embodiment of the present invention illustrated in FIG. 8 has a function for communicating with each of a work machine 10 and an unmanned aircraft 40. The work machine support server 30 may be mounted on the unmanned aircraft 40 and may have the function for communicating with the work machine 10. The work machine support server 30 includes a contact possibility recognition element 21 and a contact avoidance operation control element 22. In this case, a work machine control unit 20 may not have such functions as the contact possibility recognition element 21 and the contact avoidance operation control element 22.

According to the work machine support server 30 having the configuration, if the contact possibility recognition element 21 recognizes that the possibility of contact between a working mechanism 140 and the unmanned aircraft 40 is high, then the contact avoidance operation control element 22 transmits a specified signal to the unmanned aircraft 40. In response to the specified signal, an aircraft control unit 400 controls the movement modes of the plurality of blades so as to reduce the contact possibility. Thus, if the possibility of contact between the working mechanism 140 of the work machine 10 and the unmanned aircraft 40 is recognized as being high, then the flight mode of the unmanned aircraft 40 is changed thereby to reduce the contact possibility (refer to FIG. 3, FIG. 6, and FIG. 7).

### Description of Reference Numerals

10 .. work machine; 20 .. work machine control unit; 21 .. contact possibility recognition element; 22 .. contact avoidance operation control element; 30 .. work machine support server; 40 .. unmanned aircraft; 202 .. wireless communication unit; 210 .. input interface; 211 .. operating mechanism; 220 .. output interface; 222 .. image output unit; 140 .. working mechanism (work attachment); 400 .. aircraft control unit; 402 .. wireless communication unit; and 410 .. imaging unit.

## Claims

1. A work machine (10) comprising:
a lower traveling body (110); an upper pivoting body (120) that can pivot with respect to the lower traveling body (110); a working mechanism (140) that extends from the upper pivoting body (120); and a control unit (20) configured to control an operation mode of each of the lower traveling body (110), the upper pivoting body (120), and the working mechanism (140), wherein the control unit (20) includes:
a contact possibility recognition element (21) and
a contact avoidance operation control element (22) which, in a case where the contact possibility recognition element (21) recognizes that a contact possibility is high, is configured to transmit a specified signal for changing a flight mode of the unmanned aircraft (40) to the unmanned aircraft (40) or a remote control unit (50) of the unmanned aircraft (40);
**characterized in that** the contact possibility recognition element (21) is configured to recognize a degree of possibility of contact between the working mechanism (140) and an unmanned aircraft (40) based on the relative position and the change of the relative position of the unmanned aircraft (40) with reference to the working mechanism (140).

2. The work machine (10) according to claim 1,
wherein the contact possibility recognition element (21) is configured to recognize a state of change in the possibility of contact between the working mechanism (140) and the unmanned aircraft (40) based on the state of change in the relative position of the unmanned aircraft (40) with reference to the working mechanism (140) according to the operation mode of at least one of the lower traveling body (110), the upper pivoting body (120), and the working mechanism (140), and
in a case where the contact possibility recognition element (21) recognizes that the contact possibility will be high, the contact avoidance operation control element (22) is configured to transmit the specified signal for changing the flight mode of the unmanned aircraft (40) to the unmanned aircraft (40) or the remote control unit (50) of the unmanned aircraft (40).

3. The work machine (10) according to claim 1,
wherein the contact possibility recognition element (21) is configured to recognize a spread state of a reference space, wherein said spread state of the reference space is a space that the working mechanism (140) occupies or passes through in one specified period of time based on the operation mode of at least one of the lower traveling body (110) , the upper pivoting body (120), and the working mechanism (140) in the one specified period of time when the upper pivoting body (120) pivots clockwise or counterclockwise with respect to the lower travelling body (110), and is configured to recognize that the contact possibility is high in a case where a real space position of the unmanned aircraft (40) is included in the reference space.

4. A work machine support server (30) having a function for communicating with each of an unmanned aircraft (40) and a work machine (10), said work machine (10) being configured to be operated with regard to a position of the unmanned aircraft (40), the work machine (10) including a lower traveling body (110), an upper pivoting body (120) that can pivot with respect to the lower traveling body (110), a working mechanism (140) that extends from the upper pivoting body (120), and a control unit (20) that is configured to control an operation mode of each of the lower traveling body (110), the upper pivoting body (120), and the working mechanism (140), the work machine support server (30) comprising:
a contact possibility recognition element (21) which is configured to recognize a degree of possibility of contact between the working mechanism (140) and an unmanned aircraft (40) based on a relative position and the change of the relative position of the unmanned aircraft (40) with reference to the working mechanism (140) according to communication with at least one of the work machine (10) and the unmanned aircraft (40); and
a contact avoidance operation control element (22) which, in a case where the contact possibility recognition element (21) recognizes that the contact possibility is high, is configured to transmit a specified signal for changing a flight mode of the unmanned aircraft (40) to the unmanned aircraft (40) or a remote control unit (50) of the unmanned aircraft (40).

## Patentansprüche

1. Arbeitsmaschine (10), umfassend:
einen unteren Fahrkörper (110); einen oberen Schwenkkörper (120), der in Bezug auf den unteren Fahrkörper (110) schwenken kann; einen Arbeitsmechanismus (140), der sich von dem oberen Schwenkkörper (120) erstreckt; und eine Steuereinheit (20), die konfiguriert ist, einen Betriebsmodus von jedem des unteren Fahrkörpers (110), des oberen Schwenkkörpers (120) und des Arbeitsmechanismus (140) zu steuern,
wobei die Steuereinheit (20) umfasst:
ein Kontaktwahrscheinlichkeits-Erkennungselement (21) und
ein Kontaktvermeidungsbetriebssteuerelement (22), das in einem Fall, in dem das Kontaktwahrscheinlichkeits-Erkennungselement (21) erkennt, dass eine Kontaktwahrscheinlichkeit hoch ist, konfiguriert ist, ein vorgegebenes Signal zur Änderung eines Flugmodus des unbemannten Luftfahrzeugs (40) an das unbemannte Luftfahrzeug (40) oder eine Fernsteuereinheit (50) des unbemannten Luftfahrzeugs (40) zu übertragen,
**dadurch gekennzeichnet, dass** das Kontaktwahrscheinlichkeits-Erkennungselement (21) konfiguriert ist, einen Grad einer Kontaktwahrscheinlichkeit zwischen dem Arbeitsmechanismus (140) und einem unbemannten Luftfahrzeug (40) gemäß einer relativen Position und der Änderung der relativen Position des unbemannten Luftfahrzeugs (40) in Bezug auf den Arbeitsmechanismus (140) zu erkennen.

2. Arbeitsmaschine (10) gemäß Anspruch 1,
wobei das Kontaktwahrscheinlichkeits-Erkennungselement (21) konfiguriert ist, einen Zustand der Änderung der Kontaktwahrscheinlichkeit zwischen dem Arbeitsmechanismus (140) und dem unbemannten Luftfahrzeug (40) auf der Grundlage eines Zustands der Änderung der relativen Position des unbemannten Luftfahrzeugs (40) in Bezug auf den Arbeitsmechanismus (140) gemäß dem Betriebsmodus von mindestens einem des unteren Fahrkörpers (110), des oberen Schwenkkörpers (120) und des Arbeitsmechanismus (140) zu erkennen, und
in einem Fall, in dem das Kontaktwahrscheinlichkeits-Erkennungselement (21) erkennt, dass die Kontaktwahrscheinlichkeit hoch sein wird, das Kontaktvermeidungsbetriebssteuerelements (22) konfiguriert ist, das vorgegebene Signal zur Änderung des Flugmodus des unbemannten Luftfahrzeugs (40) an das unbemannte Luftfahrzeug (40) oder die Fernsteuereinheit (50) des unbemannten Luftfahrzeugs (40) zu übertragen.

3. Arbeitsmaschine (10) gemäß Anspruch 1,
wobei das Kontaktwahrscheinlichkeits-Erkennungselement (21) konfiguriert ist, einen Ausbreitungszustand eines Bezugsraums zu erkennen, wobei der Ausbreitungszustand des Bezugsraums ein Raum ist, den der Arbeitsmechanismus (140) auf der Basis des Betriebsmodus von mindestens einem des unteren Fahrkörpers (110), des oberen Schwenkkörpers (120) und des Arbeitsmechanismus (140) in einem vorgegebenen Zeitraum, in dem der obere Schwenkkörper (120) im Uhrzeigersinn oder gegen den Uhrzeigersinn in Bezug auf den unteren Fahrkörper (110) schwenkt, einnimmt oder in mindestens einem vorgegebenen Zeitraum durchläuft,
und konfiguriert ist, zu erkennen, dass die Kontaktwahrscheinlichkeit in einem Fall, in dem eine reale Raumposition des unbemannten Luftfahrzeugs (40) in dem Bezugsraum enthalten ist, hoch ist.

4. Arbeitsmaschinenunterstützungsserver (30) mit einer Funktion zum Kommunizieren sowohl mit einem unbemannten Luftfahrzeug (40) als auch mit einer Arbeitsmaschine (10), wobei die Arbeitsmaschine (10) konfiguriert ist, in Bezug auf eine Position des unbemannten Luftfahrzeugs (40) betrieben zu werden, wobei die Arbeitsmaschine (10) einen unteren Fahrkörper (110), einen oberen Schwenkkörper (120), der in Bezug auf den unteren Fahrkörper (110) schwenken kann, einen Arbeitsmechanismus (140), der sich von dem oberen Schwenkkörper (120) erstreckt; und eine Steuereinheit (20), die konfiguriert ist, einen Betriebsmodus von jedem des unteren Fahrkörpers (110), des oberen Schwenkkörpers (120) und des Arbeitsmechanismus (140) zu steuern, umfasst, und wobei der Arbeitsmaschinenunterstützungsserver (30) umfasst:
ein Kontaktwahrscheinlichkeits-Erkennungselement (21), das konfiguriert ist, einen Grad einer Kontaktwahrscheinlichkeit zwischen dem Arbeitsmechanismus (140) und einem unbemannten Luftfahrzeug (40) auf Basis einer relativen Position und der Änderung der relativen Position des unbemannten Luftfahrzeugs (40) in Bezug auf den Arbeitsmechanismus (140) gemäß Kommunikation mit mindestens einer der Arbeitsmaschine (10) und des unbemannten Luftfahrzeugs (40) zu erkennen; und
ein Kontaktvermeidungsbetriebssteuerelement (22), dass in einem Fall, in dem das Kontaktwahrscheinlichkeits-Erkennungselement (21) erkennt, dass die Kontaktwahrscheinlichkeit hoch ist, konfiguriert ist, ein vorgegebenes Signal zur Änderung eines Flugmodus des unbemannten Luftfahrzeugs (40) an das unbemannte Luftfahrzeug (40) oder eine Fernsteuereinheit (50) des unbemannten Luftfahrzeugs (40) zu übertragen.

## Revendications

1. Machine de travail (10) comprenant :
un corps mobile inférieur (110) ; un corps pivotant supérieur (120) qui peut pivoter par rapport au corps mobile inférieur (110) ; un mécanisme de travail (140) qui s'étend depuis le corps pivotant supérieur (120) ; et une unité de commande (20) configurée pour commander un mode de fonctionnement de chacun parmi le corps mobile inférieur (110), le corps pivotant supérieur (120), et le mécanisme de travail (140),
l'unité de commande (20) incluant :
un élément de reconnaissance de possibilité de contact (21) et
un élément de commande d'opération d'évitement de contact (22) qui, dans le cas où l'élément de reconnaissance de possibilité de contact (21) reconnaît qu'une possibilité de contact est élevée, est configuré pour transmettre un signal spécifié pour changer un mode de vol de l'aéronef sans pilote (40) pour l'aéronef sans pilote (40) ou une unité de télécommande (50) de l'aéronef sans pilote (40);
**caractérisée en ce que** l'élément de reconnaissance de possibilité de contact (21) est configuré pour reconnaître un degré de possibilité de contact entre le mécanisme de travail (140) et un aéronef sans pilote (40) en se basant sur la position relative et le changement de position relative de l'aéronef sans pilote (40) en référence au mécanisme de travail (140).

2. Machine de travail (10) selon la revendication 1,
dans laquelle l'élément de reconnaissance de possibilité de contact (21) est configuré pour reconnaître un état de changement de la possibilité de contact entre le mécanisme de travail (140) et l'aéronef sans pilote (40) en se basant sur l'état de changement de position relative de l'aéronef sans pilote (40) en référence au mécanisme de travail (140) en fonction du mode de fonctionnement d'au moins un parmi le corps mobile inférieur (110), le corps pivotant supérieur (120), et le mécanisme de travail (140), et
dans le cas où l'élément de reconnaissance de possibilité de contact (21) reconnaît que la possibilité de contact sera élevée, l'élément de commande d'opération d'évitement de contact (22) est configuré pour transmettre le signal spécifié pour changer le mode de vol de l'aéronef sans pilote (40) pour l'aéronef sans pilote (40) ou l'unité de télécommande (50) de l'aéronef sans pilote (40).

3. Machine de travail (10) selon la revendication 1,
dans laquelle l'élément de reconnaissance de possibilité de contact (21) est configuré pour reconnaître : un état de propagation d'un espace de référence, ledit état de propagation de l'espace de référence étant un espace que le mécanisme de travail (140) occupe ou traverse pendant une période du temps spécifique en se basant sur le mode de fonctionnement d'au moins un parmi le corps mobile inférieur (110), le corps pivotant supérieur (120), et le mécanisme de travail (140) pendant la période du temps spécifiée lorsque le corps pivotant supérieur (120) pivote dans le sens des aiguilles d'une montre ou dans le sens inverse des aiguilles d'une montre par rapport au corps mobile inférieur (110), et est configuré pour reconnaître que la possibilité de contact est élevée dans le cas où une position spatiale réelle de l'aéronef sans pilote (40) est incluse dans l'espace de référence.

4. Serveur de support de machine de travail (30) ayant une fonction permettant de communiquer avec chaque élément parmi un aéronef sans pilote (40) et une machine de travail (10), ladite machine de travail (10) étant configurée pour être actionnée en ce qui concerne une position de l'aéronef sans pilote (40), la machine de travail (10) incluant un corps mobile inférieur (110), un corps pivotant supérieur (120) qui peut pivoter par rapport au corps mobile inférieur (110), un mécanisme de travail (140) qui s'étend depuis le corps pivotant supérieur (120), et une unité de commande (20) qui est configurée pour commander un mode de fonctionnement de chacun parmi le corps mobile inférieur (110), le corps pivotant supérieur (120), et le mécanisme de travail (140), le serveur de support machine de travail (30) comprenant :
un élément de reconnaissance de possibilité de contact (21) qui est configuré pour reconnaître un degré de possibilité de contact entre le mécanisme de travail (140) et un aéronef sans pilote (40) en se basant sur une position relative et le changement de position relative de l'aéronef sans pilote (40) en référence au mécanisme de travail (140) selon la communication avec au moins un élément parmi la machine de travail (10) et l'aéronef sans pilote (40); et
un élément de commande d'opération d'évitement de contact (22) qui, dans un cas où l'élément de reconnaissance de possibilité de contact (21) reconnaît que la possibilité de contact est élevée, est configuré pour transmettre un signal spécifié pour changer un mode de vol de l'aéronef sans pilote (40) pour l'aéronef sans pilote (40) ou une unité de télécommande (50) de l'aéronef sans pilote (40).
